**Europäisches Patentamt**

**European Patent Office**

**Office européen des brevets**

(19)

(11) Veröffentlichungsnummer: **0 013 948**
**B1**

(12) # EUROPÄISCHE PATENTSCHRIFT

(45) Veröffentlichungstag der Patentschrift:
06.07.83

(51) Int. Cl.³: **F 16 M 11/20, F 16 M 13/04**

(21) Anmeldenummer: **80100234.6**

(22) Anmeldetag: **18.01.80**

(54) **Stativ für optische Geräte, insbesondere Kameras.**

(30) Priorität: **23.01.79 DE 2902419**

(43) Veröffentlichungstag der Anmeldung:
**06.08.80 Patentblatt 80/16**

(45) Bekanntmachung des Hinweises auf die Patenterteilung:
**06.07.83 Patentblatt 83/27**

(84) Benannte Vertragsstaaten:
**AT CH FR GB IT NL SE**

(56) Entgegenhaltungen:
**CH-A-526 070**
**DE-A-1 917 176**
**DE-C-730 340**
**FR-A-1 216 881**
**US-A-1 508 470**
**US-A-2 054 600**
**US-A-2 188 237**
**US-A-2 650 717**
**US-A-2 706 609**

(73) Patentinhaber: **CULLMANN HANDELSGESELLLSCHAFT FÜR VERBRAUCHSGÜTER M.B.H., Waldstrasse 12, D-8506 Langenzenn-Laubendorf (DE)**

(72) Erfinder: **Sellner, Kurt, Tulpenstrasse 2, D-8506 Langenzenn (DE)**

(74) Vertreter: **LOUIS, PÖHLAU, LOHRENTZ & SEGETH, Kesslerplatz 1, D-8500 Nürnberg (DE)**

## Stativ für optische Geräte, insbesondere Kameras

Die Erfindung betrifft ein Stativ für optische Geräte, insbesondere Kameras, mit einem Befestigungskopf für das Gerät, einem mit diesem gelenkig verbundenen, in seiner Länge veränderlichen Abstandshalter und wenigstens drei mit ihrem inneren Ende mittels Tragelementen am vom Befestigungskopf entfernten, unteren Ende des Abstandshalters gelagerten, zwischen einer im wesentlichen zur Achse des Abstandshalters parallelen Ruhelage und einer gespreizten Gebrauchslage verschwenkbaren Beinen.

In dieser Weise sind eine Vielzahl von Bodenstativen und Tischstativen ausgebildet, bei denen eine Mittelsäule gegenüber den ausspreizbaren Beinen verschieblich und damit der Abstand des Neigekopfes von der Aufstandsfläche für die Beine veränderlich ist. Es wird hierzu beispielsweise auf die FR-A-1 216 881 hingewiesen.

Aus der DE-C-2 401 080 ist weiter ein Schulterstativ bekannt, welches weitgehend die oben erwähnte Ausbildung besitzt, jedoch lediglich mit zwei einander gegenüberliegenden, aus der Ruhelage parallel zur Achse des Abstandshalters in eine Gebrauchslage, in der sie mit ihren äußeren Enden schräg vom Abstandshalter wegweisen, verschwenkbaren Beinen versehen ist. Dieses Stativ hat zwar den Vorteil, daß es bei Nichtgebrauch verhältnismäßig klein zusammengeklappt werden kann und als Schulterstativ einwandfrei verwendbar ist. Ein erheblicher Mangel dieses bekannten Schulterstatives ist jedoch darin zu sehen, daß seine Benutzung als Tischstativ, die in vielen Fällen, beispielsweise bei Nahaufnahmen angebracht wäre, nicht oder nur mit großen Schwierigkeiten möglich ist. In der DE-C-2 401 080 ist zwar auf die Möglichkeit der Verwendung als Tischstativ hingewiesen. Dabei liegt jedoch der Befestigungskopf gleichsam als drittes Bein auf der Tischplatte auf, so daß der Abstand der Kamera vom Tisch nur sehr gering ist, also lediglich Aufnahmen mit senkrecht stehender Kamera gemacht werden können, nicht jedoch beispielsweise Nahaufnahmen eines auf dem Tisch im Bereich des Stativs liegenden Gegenstandes. Bei Verwendung des bekannten Stativs als Tischstativ ist daher an sich nur eine Abstützung der Kamera bei normalen Aufnahmen möglich, wobei leicht eine seitliche Bewegung der auf dem Stativ befestigten Kamera eintreten kann.

Es sind weiterhin auch bereits Tischstative einer ähnlichen Ausbildung bekannt, bei denen die Beine bei Nichtgebrauch in eine Lage parallel zur Achse des Abstandshalters bewegt werden können (DE-U-6 933 480, DE-U-7 036 564, DE-U-7 112 652). Diese Stative, welche mit drei Beinen ausgestattet sind, erfüllen ihren Zweck als Tischstativ. Nachteilig ist jedoch, daß eine Benutzung als Schulterstativ unmöglich, eine Benutzung als Bruststativ nur bedingt möglich ist, weil durch das Vorhandensein von drei etwa im gleichen Winkelabstand zueinander angeordneten Beinen eine einwandfreie Anlage im Schulterbereich bzw. auf der Brust des Benutzers nicht möglich ist.

Schließlich ist beispielsweise aus der US-A-2 054 600 auch bereits ein Stativ bekannt, bei dem die Beine um die Längsachse einer Mittelsäule od. dgl. verschwenkt werden können, um sie so einerseits in eine Gebrauchsstellung, in der sie im gleichen Winkelabstand schräg nach außen weisen, und andererseits in eine Ruhestellung verbringen zu können, in der sämtliche Beine übereinander liegen. Die Schwenkbarkeit der Beine hat dabei den Zweck, das Stativ eng zusammenlegen zu können. Es ist allerdings nur eine Benutzung als Tisch- bzw. Bodenstativ möglich. Einer Verwendung als Schulterstativ stünde bei dem bekannten Stativ einerseits die nach unten vorragende Mittelsäule, andererseits der Umstand entgegen, daß die Beine nahezu geradlinig ausgebildet sind.

Bisher war es daher für den Photographen bzw. Schmalfilmer erforderlich, sofern er sowohl Aufnahmen unter Verwendung eines Schulterstatives als auch solche unter Benutzung eines Tischstatives machen wollte, jeweils getrennte Stative für beide Zwecke anzuschaffen, was einerseits selbstverständlich mit unnötig hohen Kosten verbunden ist und andererseits, beispielsweise auf Wanderungen, wo Schulter- und Tischstativ unter Umständen Verwendung finden könnten, eine zusätzliche Belastung hinsichtlich des zur Verfügung stehenden Raumes und des Gewichtes bedeutet.

Der Erfindung liegt nun die Aufgabe zugrunde, ein Stativ für optische Geräte, insbesondere für Photo- bzw. Filmkameras zu schaffen, welches in der Lage ist, sowohl die an ein Schulterstativ als auch die an ein Tischstativ zu stellenden Anforderungen einwandfrei zu erfüllen, d. h. sowohl bei Benutzung als Schulterstativ eine einwandfreie Anlage im Schulterbereich des Benutzers, als auch bei Benutzung als Tischstativ einen einwandfreien Stand auf der Tischplatte oder dergleichen zu gewährleisten.

Zur Lösung dieser Aufgabe wird nach der Erfindung vorgeschlagen, ein Stativ der eingangs erwähnten Art so auszubilden, daß die Tragelemente für mindestens zwei der Beine derart um den Abstandshalter verdrehbar sind, daß die Beine zur Bildung eines Tischstatives in eine erste Gebrauchslage, in der die Beine etwa in gleichem Winkelabstand angeordnet sind, und zur Bildung eines Schulterstatives in eine zweite Gebrauchslage, in der die Beine unter Überdeckung bzw. Anlage aneinander von zumindest zwei Beinen diametral gegenüberliegend angeordnet sind, einstellbar sind.

Das Stativ nach der Erfindung unterscheidet sich also von den bisher bekannten Stativen grundsätzlich dadurch, daß die Beine gegenüber dem Abstandshalter zur Veränderung des Winkelabstandes zwischen ihnen verdreht werden können, wodurch es möglich ist, die Beine sowohl in eine Position zu bringen, in der — bei gleichem Winkelabstand der Beine — ein einwandfreier Stand des Statives auf einer Tischplatte oder dergleichen möglich ist, als auch in einer Position, bei der die Beine einander diametral gegenüberliegen, so daß sich eine im wesentlichen langgestreckte Auflagefläche zur Abstützung im Bereich der Schulter des Benutzers erzeugen läßt. Es wird also mit dem Stativ nach der Erfindung erstmals für den Benutzer die Möglichkeit gegeben, ein und dasselbe Stativ sowohl als Schulterstativ als auch als Tischstativ einzusetzen, ohne daß die oben geschilderten Mängel der bekanten Tisch- bzw. Schulterstative hinsichtlich mangelhafter Abstützung in Kauf genommen werden müßten. Es können also bei Verwendung eines Statives gemäß der Erfindung die Kosten für ein zweites Stativ eingespart werden und darüberhinaus genügt es, ein Stativ zu transportieren, was häufig für den Benutzer angenehm sein dürfte.

Bei einer besonders einfachen Ausführungsform ist die Ausbildung derart, daß die Beine an jeweils einem seitlichen Augenpaar von axial aufeinanderfolgend auf dem Abstandshalter um diesen verdrehbar gelagerten Tragringen schwenkbar befestigt sind. Bei dieser Ausführungsform lassen sich die Beine leicht gegenüber dem Abstandshalter drehbar lagern.

Günstigerweise sollten die die Beine lagernden Tragringe stets einwandfrei in Anlage aneinander gehalten werden, um insbesondere bei Benutzung als Tischstativ einen sicheren Stand zu gewährleisten, was in einfacher Weise dadurch bewerkstelligt wird, daß die Tragringe jeweils an ihrer zu einem benachbarten Tragring weisenden Kante einen Endring aufweisen, der sich mit einem Gegen-Endring des jeweils benachbarten Tragringes überdeckt, wobei zweckmäßig zur Verhinderung der Axialbewegung jeweils der Endring einen in eine Umfangsnut des zugehörigen Gegen-Endringes eingreifenden, radial verlaufenden Stift aufweist.

Bei dieser Ausführungsform ist es günstig, wenn sich die Umfangsnut des Gegen-Endringes nur über einen Winkelbereich von etwa 60° erstreckt, weil dann gleichzeitig eine Sicherung gegen übermäßige Verdrehung der Beine erreicht und die Gebrauchslage der Beine bei Benutzung als Tisch- bzw. Schulterstativ festgelegt wird.

In Anpassung an die übliche Konstruktion von Stativen wird es auch bei dem Stativ nach der Erfindung zweckmäßig sein, drei Beine und dementsprechend drei Tragringe vorzusehen, wobei vorteilhafterweise vom unteren Ende des Abstandshalters her gesehen das Augenpaar des zweiten Tragringes in einer dem Augenpaar des ersten Tragringes entsprechenden Axialposition gegenüber dem Abstandshalter neben dem ersten Tragring angeordnet ist und die am ersten und zweiten Tragring angelenkten Beine gleich ausgebildet sind. Vorteilhafterweise entspricht bei dieser Ausgestaltung der vom unteren Ende des Abstandshalters gesehene dritte Tragring dem zweiten Tragring und trägt ein gegenüber dem ersten und zweiten Bein längeres, drittes Bein. Bei einer derartigen Ausführung ergibt sich der Vorteil, daß lediglich zwei verschiedene Tragringe und entsprechend zwei unterschiedliche Beine notwendig sind, was sowohl bezüglich der Herstellungskosten (Formkosten) als auch hinsichtlich der Lagerung der zur Herstellung des Statives nötigen Teile günstig ist.

Um das Stativ bei Nichtgebrauch möglichst klein zusammenlegen zu können, ist vorgesehen, daß die Tragelemente für die Beine axial gegenüber dem Abstandshalter verschieblich und mittels einer Arretiereinrichtung in ihrer Gebrauchslage am unteren Ende des Abstandshalters festlegbar sind. Bei Nichtgebrauch werden dann die Tragelemente mit den Beinen in Richtung auf den Befestigungskopf auf dem Abstandshalter verschoben, so daß die zusammengeklappten Beine nicht über das untere Ende des Abstandshalters vorragen.

Bei Ausbildung des Statives mit Tragringen für die Beine ist vorgesehen, daß die Arretiereinrichtung wenigstens einen Klemmkörper umfaßt, der in einer Durchbrechung eines der Tragringe im Bereich des eine entsprechende Anlauffläche aufweisenden inneren Endes eines der Beine angeordnet und mittels der Anlauffläche beim Ausklappen dieses Beines in eine Umfangsnut des Abstandshalters drückbar ist. Bei einer solchen Ausbildung der Arretiereinrichtung erfolgt automatisch mit dem Aufklappen der Beine eine Verriegelung gegen axiale Verschiebung des den Klemmkörper tragenden Tragringes und damit auch der anderen, mit diesem Tragring verbundenen Tragringe. Eine besonders sichere Verriegelung erreicht man hierbei dadurch, daß in dem ersten Tragring (vom unteren Ende des Abstandshalters her gesehen) zwei Klemmkörper untergebracht sind, wobei sich der dem zweiten Bein zugeordnete Klemmkörper über einen Umfangs-Winkelbereich erstreckt, welcher dem möglichen Drehwinkel des zweiten Tragringes gegenüber dem ersten Tragring entspricht, so daß eine Verriegelung über den zweiten Klemmkörper in beiden sinnvollen Positionen des zweiten Beines gegenüber dem ersten Bein gewährleistet ist. Die Klemmkörper sind vorteilhafterweise sich nach außen verjüngende und lose in den entsprechend verjüngten Durchbrechungen des jeweiligen Tragringes angeordnete Körper aus einem entsprechenden im allgemeinen leicht elastischen Material. Infolge der Verjüngung ist keine besondere Halterung für die Klemmkörper vorgesehen. Die Klemmkörper könnten lediglich in das Innere des Tragringes hineinfallen, was jedoch durch den dort angeordneten Abstandshalter verhindert wird.

Es liegt weiter im Rahmen der Erfindung, daß wenigstens eines der Tragelemente für eines der Beine gegen Drehung gegenüber dem Abstandshalter sicherbar ist, um unter Umständen eine genau definierte Position zu dem Befestigungskopf zu erreichen. Dies läßt sich bei Vorhandensein von Tragringen, die axial gegenüber dem Abstandshalter verschiebbar sind, in einfacher Weise dadurch erreichen, daß der dem unteren Ende des Abstandshalters zugeordnete erste Tragring wenigstens eine zum Abstandshalter zu offene Axialnut aufweist, in welche ein an der Außenfläche des Abstandshalters nahe dessen unterem Ende vorgesehener Vorsprung bei entsprechender Axialverschiebung des ersten Tragringes einführbar ist. Auf diese Weise erfolgt die Sicherung gegen Drehung automatisch dann, wenn die Beine in ihre Gebrauchslage verbracht werden, ohne daß ein großer zusätzlicher konstruktiver Aufwand getroffen werden müßte.

Um eine gute Anlage des Statives bei Benutzung als Schulterstativ zu gewährleisten, ist es vorteilhaft, wenn wenigstens die in der zweiten Gebrauchslage zur Abstützung dienenden Beine zur Bildung einer konkaven Abstützfläche gewölbt sind.

Nachstehend wird ein bevorzugtes Ausführungsbeispiel der Erfindung anhand der Zeichnung näher erläutert.

In der Zeichnung stellen dar:

Fig. 1 eine Seitenansicht des Statives bei Verwendung als Tischstativ,

Fig. 2 eine Seitenansicht des unteren Endes des Statives bei Verwendung als Schulterstativ,

Fig. 3 eine Unteransicht des Statives, wobei sich die Beine in der ersten Gebrauchslage (Tischstativ) befinden,

Fig. 4 einen Axialschnitt durch das untere Ende des Statives in der zweiten Gebrauchslage, d. h. bei Verwendung als Schulterstativ, und

Fig. 5 das in Fig. 4 rechte, erste Bein mit dem anschließenden Bereich des ersten Tragringes in der Ruhelage.

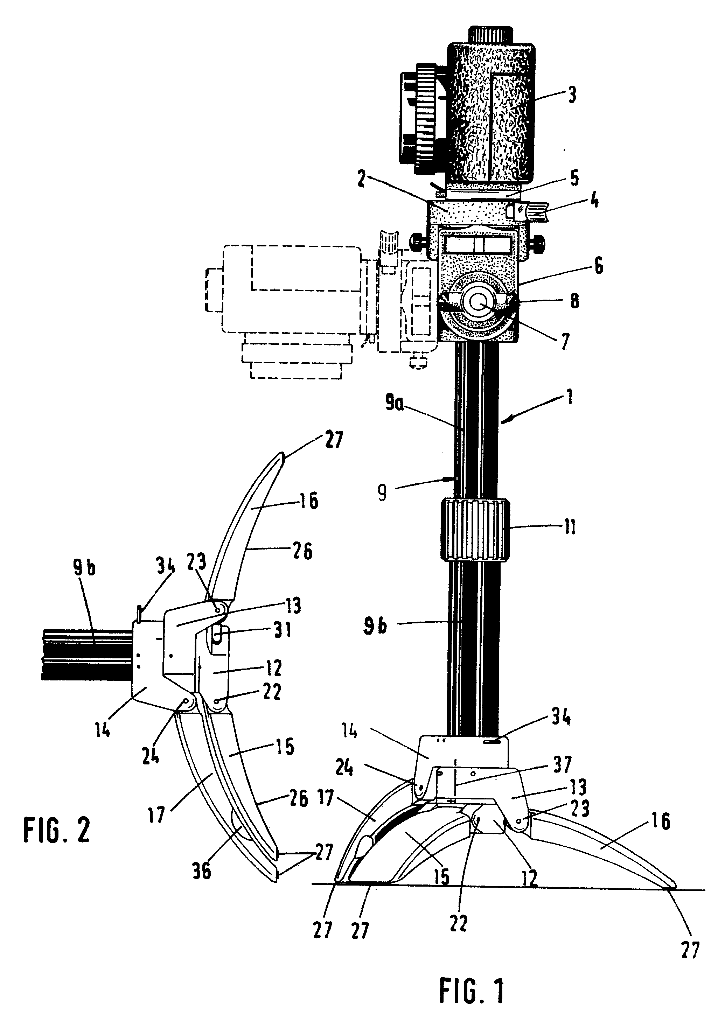

Das insgesamt mit 1 bezeichnete Stativ umfaßt einen Befestigungskopf 2 für eine Kamera 3, welche beispielsweise über eine mittels eines Betätigungskopfes 4 bedienbare Schnellkopplung 5 an dem Befestigungskopf 2 festgelegt sein kann. Der Befestigungskopf 2 ist Teil eines im Prinzip bekannten Neigekopfes 6, der eine Kippbewegung um die Achse 7 nach Lösung der Feststellschraube 8 in die in Fig. 1 gestrichelt gezeigte Position gestattet.

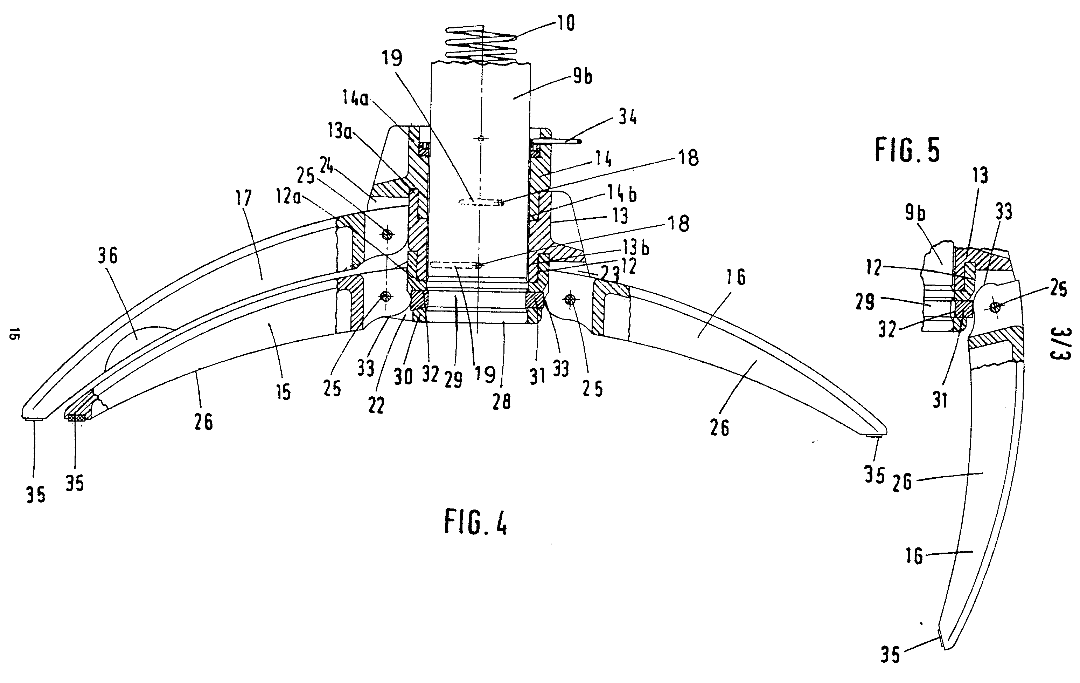

Der Neigekopf 6 ist am oberen Ende des aus den teleskopartig ineinandergreifenden Rohren 9a und 9b bestehenden Abstandshalter 9 befestigt, die Rohre 9a, 9b des Abstandshalters können zur Veränderung seiner Länge ineinandergeschoben werden, wobei eine in den Rohren 9a, 9b angebrachte Feder 10 (Fig. 4) das Bestreben hat, die Rohre 9a, 9b in die in Fig. 1 gezeigte Position größter Länge zu bewegen. Zur Festlegung der jeweiligen Länge des Abstandshalters 9 dient eine Klemmutter 11, welche auf ein Gewinde am oberen Ende des unteren Rohres 9b aufgeschraubt ist.

Auf dem unteren Rohr 9b des Abstandshalters 9 sind mittels dreier Tragringe 12, 13, 14, drei Beine 15, 16, 17 zusammenklappbar, um das Rohr 9b des Abstandshalters 9 verdrehbar sowie axial gegenüber dem Rohr 9b verschiebbar gelagert.

Die Art der Lagerung der Beine 15, 16, 17 an dem Rohr 9b mittels der Tragringe 12, 13, 14 ergibt sich insbesondere aus einem Vergleich der Fig. 1 und 4. Hieraus ist ersichtlich, daß die Tragringe 12, 13, 14 jeweils an ihrer zum benachbarten Tragring weisenden Kante bzw. Stirnseite einen Endring 12a, 13a und prinzipiell auch 14a aufweisen. Der Endring 14a des dritten Tragringes 14 ist dabei nur deswegen vorgesehen, weil dieser Tragring 14 identisch zum Tragring 13 ausgebildet ist, um Teile zu sparen. In gleicher Weise sind auch die Beine 15 und 16 gleich gestaltet. Die Endringe 12a und 13a der Tragringe 12 und 13 umgreifen jeweils außenseitig Gegen-Endringe 13b bzw. 14b der Tragringe 13 und 14. Der erste Tragring 12 besitzt keinen derartigen Gegen-Endring, da je an ihm unten kein weiterer Tragring anschließt. Die Endringe 12a und 13a sind mit den Gegen-Endringen 13b und 14b derart verriegelt, daß eine gegenseitige Axialverschiebung der Tragringe 12, 13, 14 unmöglich ist. Hierzu dient ein jeweils von außen durch den Endring 12a bzw. 13a geführter Verriegelungsstift 18, der mit seinem inneren Ende in eine Umfangsnut 19 des Gegen-Endringes 13b bzw. 14b eingreift. Die Umfangsnuten 19 der Gegen-Endringe 13b bzw. 14b erstrecken sich, wie aus Fig. 4 ersichtlich ist, lediglich über einen gewissen Umfangsbereich, und zwar nur soweit, daß eine gegenseitige Verdrehung der Tragringe 12, 13, 14 um jeweils 60° möglich ist, was genügt, um die Beine 15, 16, 17 in die bei den Fig. 1 und 2 bzw. 3 und 4 gezeigten Gebrauchslagen bringen zu können.

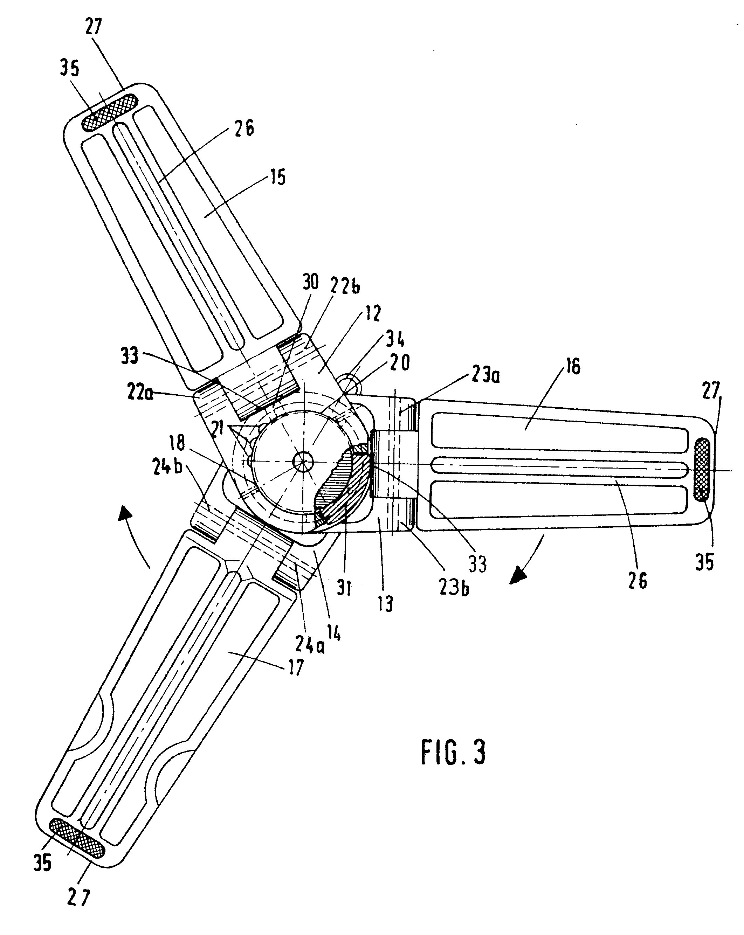

Die Drehbewegung des zweiten Tragringes 13 und und dritten Tragringes 14 gegenüber dem ersten Tragring 12 ist, wie erläutert, durch das Zusammenwirken der Verriegelungsstifte 18 mit den Umfangsnuten 19 begrenzt. Zur Verhinderung einer ungewollten Drehung des ersten Tragringes 12 gegenüber dem Rohr 9b weist dieser Tragring 12, wie die Fig. 3 erkennen läßt, an seiner Innenfläche 20 beim dargestellten Ausführungsbeispiel drei Axialnuten 21 auf. In eine dieser Axialnuten 21 greift, wenn die Tragringe 12, 13, 14 in die untere Endposition gemäß Fig. 4 bewegt werden, ein an der Außenfläche des Rohres 9b des Abstandshalters nahe dessen unterem Ende vorgesehener, in der Zeichnung nicht dargestellter, Vorsprung, ein, so daß eine ungewollte Verdrehung des Tragringes 12 gegenüber dem Rohr 9b verhindert ist. Es sind in Figur 3 drei Axialnuten 21 eingezeichnet. Selbstverständlich kann die Zahl dieser Nuten jedoch geändert werden. Es würde beispielsweise genügen, lediglich eine Axialnut 21 vorzusehen.

Aus der Zeichnung, vor allem den Fig. 2 und 4, kann entnommen werden, daß die Beine 15, 16, 17 in ganz besonderer Weise mittels der Tragringe 12, 13, 14 gelagert sind. Zur Lagerung der Beine 15, 16, 17 weisen die Tragringe 12, 13, 14 jeweils zwei Augen 22a, 22b, 23a, 23b und 24a, 24b auf, die jeweils die Schwenkachse 25 zur Lagerung des inneren Endes der Beine 15, 16, 17 durchgreifen.

Die Tragringe 12 einerseits bzw. 13 und 14 andererseits sind, wird vor allem die Fig. 1 und 2 deutlich erkennen lassen, so ausgebildet, daß bei dem fertig montierten Stativ das Augenpaar 22 des ersten Tragringes 12 auf der gleichen Höhe liegt wie das Augenpaar 23 des zweiten Tragringes 13, d. h., das Augenpaar 23 des Tragringes 13 ist nach unten bis in den Bereich des ersten Tragringes 12 gezogen. Da der Tragring 14 dem Tragring 12 entspricht, reicht das Augenpaar 24 des Tragringes 14 ebenfalls bis in einen Bereich seitlich neben dem Tragring 13. Da die Lagerachsen 25 für die Beine 15 und 16 aufgrund der speziellen Ausbildung der Tragringe 12 und 13 in der gleichen Axialposition gegenüber dem Rohr 9b angeordnet sind, ist es selbstverständlich möglich, die Beine 15 und 16 gleich auszubilden. Das Bein 17 dagegen, welches in einer anderen Axialposition gelagert ist, muß, um einen einwandfreien Stand des Statives zu erreichen, eine größere Länge besitzen, wie dies aus Fig. 4 entnommen werden kann.

Bei dieser Gelegenheit sei darauf hingewiesen, daß die Beine 15, 16, 17, auf jeden Fall die nach unten weisenden Flächen 26 der gleichlangen Beine 15 und 16, zweckmäßig in der aus Fig. 4 ersichtlichen Weise konkav gekrümmt sein sollten, um eine einwandfreie Anlage des Statives im Schulterbereich bei Benutzung als Schulterstativ gemäß Fig. 2 zu erreichen. Die Krümmung des Beines 17 wäre an sich nicht unbedingt erforderlich. Sie ist jedoch zur Anpassung an die Gestalt der Beine 15 und 16 zweckmäßig.

Wie bereits erwähnt, sind die Tragringe 12, 13, 14 mit den Beinen 15, 16, 17 axial gegenüber dem Rohr 9b des Abstandshalters 9 verschieblich, und zwar soweit, daß bei Nichtgebrauch des Statives 1 die eingeklappten Beine 15, 16, 17 mit ihren freien Enden 27 in etwa mit dem unteren Ende 28 des Rohres 9b abschließen. In diesem Fall muß natürlich eine Arretierung für die Tragringe 12, 13, 14 bzw. Beine 15, 16, 17 in ihrer Gebrauchsstellung am unteren Ende des Rohres 9b vorgesehen sein. Zu diesem Zweck weist das Rohr 9b nahe seinem unteren Ende 28 eine Umfangsnut 29 auf, in welche zwei Klemmkörper 30, 31 (Fig. 3, 4, 5) eindrückbar sind. Die Klemmkörper 30, 31 sind in Durchbrechungen 32 des ersten Tragringes 12 gelagerte Formkörper, welche sich durch die gesamte Wand des Tragringes 12 erstrecken und eine sich nach außen leicht konisch verjüngende Querschnittsform besitzen. Auf diese Weise ist ein Herausfallen der Klemmkörper 30, 31 nach außen verhindert. Ein Herausfallen zur Innenseite des Tragringes 12 zu wird dadurch verhindert, daß in der Bohrung des Tragringes 12 ja das Rohr 9b bzw. dessen Endkappe mit der Umfangsnut 29 sitzt.

Die Klemmkörper 30, 31 wirken, wie vor allem ein Vergleich der Fig. 4 und 5 ergibt, mit Anlaufflächen 33 am inneren Ende der gleichen Beine 15, 16 derart zusammen, daß bei ausgeklappten Beinen 15, 16 die Klemmkörper 30, 31 in die Umfangsnut 29 gedrückt sind (Fig. 4), während bei nach innen geklappten Beinen 15, 16 die Klemmkörper 30, 31 nach außen in die aus Fig. 5 ersichtliche Position bewegt werden können. In der Stellung gemäß Fig. 4, d. h. bei ausgeklappten Beinen, wird somit durch die in die Umfangsnut 29 eingreifenden Klemmkörper 30, 31 eine Axialverschiebung des Tragringes 12 und damit auch der Tragringe 13, 14 und der Beine 15, 16, 17 gegenüber dem Rohr 9b verhindert, während bei eingeklappten Beinen gemäß Fig. 5 eine derartige Axialverschiebung ohne weiteres möglich ist.

Die Klemmkörper 30, 31 sind unterschiedlich ausgebildet. Der Klemmkörper 30 erstreckt sich, wie in Fig. 3 gestrichelt angedeutet, lediglich über einen sehr geringen Winkelbereich. Dies reicht aus, da das Bein 15 direkt am Tragring 12 gelagert ist und infolgedessen keine Verdrehung gegenüber dem Klemmkörper 30 erfolgen kann. Demgegenüber erstreckt sich der Klemmkörper 31 über einen Winkelbereich von wenigstens 60°, wie Fig. 3 deutlich zeigt. Diese Winkelerstreckung des Klemmkörpers 31 ist deswegen erforderlich weil das Bein 16 gegenüber dem Bein 15 in Pfeilrichtung um einen Winkel von 60° verdreht werden kann. Eine Klemmwirkung kann daher nur erreicht werden, wenn die Anlauffläche 33 des Beines 16 in jeder dieser Positionen mit dem Klemmkörper 31 zusammenwirken kann.

Abschließend sei noch erwähnt, daß der dritte Tragring 14 eine Öse 34 aufweist, welche es gestattet, das Stativ 1 mit einem eventuell daran befestigten optischen Gerät, z. B. einer Photo- oder Filmkamera, an einen Riemen oder dergleichen anzuhängen, so daß es möglich ist, das Stativ über der Schulter zu tragen. Diese Öse 34 in Verbindung mit einem Riemen kann unter Umständen auch dazu beitragen, die Handhabung einer insbesondere schweren Filmkamera zu erleichtern.

Zur Erhöhung der Rutschsicherheit sind die Beine 15, 16, 17 an ihrem freien Ende 27 mit entsprechenden reibungserhöhenden Auflagen 35, beispielsweise Gummiplättchen, versehen, die wie Fig. 4 zeigt, teilweise in die Beine eingelassen sein können.

Das längere Bein 17 besitzt außerdem Griffaussparungen 36, um die Bedienung zu erleichtern.

Die Handhabung des Statives nach der Erfindung geschieht wie folgt:

Es sei davon ausgegangen, daß sich das Stativ in der Ruhestellung befindet, d. h. die Rohre 9a, 9b ineinandergeschoben sind und die Tragringe 12, 13, 14 mit den eingeklappten Beinen sich in der oberen Endstellung, d. h. in Anlage an der Klemmschraube 11 befinden, so daß die freien Enden 27 der Beine 15, 16, 17 mit dem unteren Ende des Abstandshalters 9 abschließen.

Soll das Stativ nun als Tischstativ verwendet werden, so werden die Tragringe gemäß den auf Fig. 1 gezeigten Markierungen 37 hinsichtlich ihrer Drehung ausgerichtet und dann die Tragringe 12, 13, 14 mit den Beinen 15, 16, 17 in die untere Endstellung gemäß Fig. 1 verschoben. In dieser Stellung wird zuerst das längere Bein 17 aufgeklappt, dann werden die kürzeren Beine 15, 16 ebenfalls nach außen geklappt. Durch dieses Aufklappen der Beine 15 und 16 werden die Klemmkörper 30, 31 in die Umfangsnut 29 des Abstandshalters 9 gedrückt und damit die Tragringe 12, 13 und 14 gegen eine Axialbewegung gegenüber dem Rohr 9b arretiert. Beim Verschieben der Tragringe 12, 13, 14 in die Gebrauchslage nach unten wird gleichzeitig der nicht gezeigte Vorsprung in eine der Axialnuten 21 eingeführt, wodurch auch eine Sicherung gegen unerwünschte Drehung der Beine 15, 16 und 17 gegenüber dem Abstandshalter 9 gewährleistet wird.

Zum Gebrauch als Tischstativ ist es nun lediglich noch erforderlich, durch Lösen der Klemmschraube und entsprechende gegenseitige Verschiebung der Rohre 9a, 9b die gewünschte Höhe einzustellen, wobei nach Erreichen der Höhe die Klemmschraube 11 wieder festzuziehen ist. Außerdem muß die Kameraposition mittels des Neigekopfes 6 entsprechend eingestellt werden.

Soll dagegen das Stativ nicht als Tischstativ sondern als Schulterstativ Verwendung finden, so muß ausgehend von der ersten Gebrauchslage als Tischstativ gemäß Fig. 1 zumindest das zweite Bein 16 wieder nach innen geklappt werden, um dadurch den Druck auf den Klemmkörper 31 und infolgedessen die Reibung zwischen dem Klemmkörper 31 und dem Boden der Umfangsnut 29 zu vermindern, da sonst eine Verdrehung des Tragringes 13 mit dem Bein 16 gegenüber dem über die Axialnut 21 gegen Drehung gesicherten Tragring 12 praktisch unmöglich wäre.

Nach Lösen der Verriegelung wird dann — davon ausgehend, daß das Bein 15 feststeht — das Bein 16 um 60° (im Uhrzeigersinn gemäß Fig. 3) verdreht, wobei im Laufe dieser Verdrehung des zweiten Beines 16 auch das dritte Bein 17 um 60° verdreht wird. Anschließend kann dann das dritte Bein 17 um weitere 60° in die aus den Fig. 2 und 4 ersichtliche Position gedreht werden, in der es das erste Bein 15 überdeckt. Nach Verdrehung des Beines 16 um 60° im Uhrzeigersinn und des Beines 17 um 120° im Uhrzeigersinn bei Ansicht nach Fig. 3 erhält man dann die zweite Gebrauchslage gemäß den Fig. 2 und 4, in der eine Benutzung des Statives als Schulterstativ möglich ist. Vor Benutzen ist das zweite Bein 16 dann noch nach außen zu klappen, wodurch der Klemmkörper 31 wieder fest in die Umfangsnut 29 gedrückt wird.

Soll das Stativ zusammengeklappt werden, so müssen, nachdem die Beine 15 und gegebenenfalls 16 nach innen geklappt wurden, die Beine 15, 16 und 17 in die der Verwendung als Tischstativ entsprechende erste Gebrauchslage gebracht werden, in der sie gleichen Winkelabstand voneinander haben. Die Beine 15 und 16 können in ihrer nach innen geklappten Ruhestellung verbleiben. Sobald dies geschehen ist, können mittels des Beines 17 die Tragringe 12, 13, 14 nach oben in Richtung auf die Klemmschraube 11 verschoben werden. Wenn die entsprechende Position erreicht ist, wird auch das Bein 17 nach innen geklappt. Es wäre auch denkbar, das Bein 17 bereits vor dem Verschieben der Tragringe nach innen zu klappen.

Abschließend sei noch darauf hingewiesen, daß der Grundgedanke der Erfindung selbstverständlich nicht nur bei dreibeinigen Stativen sondern beispielsweise auch bei Stativen mit vier Beinen Anwendung finden kann. In diesem Falle könnten dann sogar jeweils zwei Beine an einem gemeinsamen Tragring vorgesehen sein und es wäre lediglich eine gegenseitige Verdrehung von 90° der Beinpaare zum Übergang von der ersten Gebrauchslage als Tischstativ in die zweite Gebrauchslage als Schulterstativ erforderlich.

## Patentansprüche

1. Stativ für optische Geräte, insbesondere Kameras, mit einem Befestigungskopf (2) für das Gerät, einem mit diesem gelenkig verbundenen, in seiner Länge veränderlichen Abstandshalter (9) und wenigstens drei mit ihrem inneren Ende mittels Tragelementen (12, 13, 14) am vom Befestigungskopf (2) entfernten, unteren Ende des Abstandshalters (9) gelagerten, zwischen einer im wesentlichen zur Achse des Abstandshalters (9) parallelen Ruhelage und einer gespreizten Gebrauchslage verschwenkbaren Beinen (15, 16,17), dadurch gekennzeichnet, daß die Tragelemente (12, 13, 14) für mindestens zwei der Beine (15, 16, 17) derart um den Abstandshalter (9) verdrehbar sind, daß die Beine zur Bildung eines Tischstatives in eine erste Gebrauchslage (Fig. 1, 3), in der die Beine in Umfangsrichtung etwa in gleichem Winkelabstand voneinander angeordnet sind, und zur Bildung eines Schulterstatives in eine zweite Gebrauchslage (Fig. 2, 4), in der die Beine unter Überdeckung bzw. gegenseitiger Anlage von zumindest zwei Beinen diametral gegenüberliegend angeordnet sind, einstellbar sind.

2. Stativ nach Anspruch 1, dadurch gekennzeichnet, daß die Beine (15, 16, 17) an jeweils einem seitlichen Augenpaar (22, 23, 24) von axial aufeinanderfolgend auf dem Abstandshalter (9) um diesen verdrehbar gelagerten, als Tragelemente dienenden Tragringen (12, 13, 14) schwenkbar befestigt sind.

3. Stativ nach Anspruch 1 und 2, dadurch gekennzeichnet, daß die Tragringe (12, 13, 14) jeweils an ihrer zu einem benachbarten Tragring weisenden Kante einen Endring (12a, 13a, 14a) aufweisen, der sich mit einem Gegen-Endring (13b, 14b) des jeweils benachbarten Tragringes überdeckt und daß zur Verhinderung der Axialbewegung jeweils der Endring (12a, 13a) einen in eine Umfangsnut (19) des zugehörigen Gegen-Endringes (13b, 14b) eingreifenden, radial verlaufenden Verriegelungsstift (18) aufweist.

4. Stativ nach Anspruch 3, dadurch gekennzeichnet, daß sich die Umfangsnut (19) des Gegen-Endringes (13b, 14b) nur über einen Winkelbereich von etwa 60° erstreckt.

5. Stativ nach einem der Ansprüche 2 bis 4, dadurch gekennzeichnet, daß drei Beine (15, 16, 17) und dementsprechend drei Tragringe (12, 13, 14) vorgesehen sind, daß vom unteren Ende (28) des Abstandshalters (9) gesehen das Augenpaar (23) des zweiten Tragringes (13) in einer dem Augenpaar (22) des ersten Tragringes (12) entsprechenden Axialposition gegenüber dem Abstandshalter (9) neben dem ersten Tragring (12) angeordnet ist, und daß die am ersten und zweiten Tragring (12, 13) angelenkten Beine (15, 16) gleich ausgebildet sind.

6. Stativ nach Anspruch 5, dadurch gekennzeichnet, daß der vom unteren Ende (28) des Abstandshalters (9) gesehene dritte Tragring (14) dem zweiten Tragring (13) entspricht und ein gegenüber dem ersten und zweiten Bein (15, 16) längeres drittes Bein (17) trägt.

7. Stativ nach einem der vorhergehenden Ansprüche, dadurch gekennzeichnet, daß die Tragelemente (12, 13, 14) für die Beine (15, 16, 17) axial gegenüber dem Abstandshalter (9) verschieblich und mittels einer Arretiereinrichtung (29, 30, 31, 33) in ihrer Gebrauchslage am unteren Ende (28) des Abstandshalters festlegbar sind.

8. Stativ nach Anspruch 7 und einem der Ansprüche 2 bis 6, dadurch gekennzeichnet, daß die Arretiereinrichtung wenigstens einen Klemmkörper (30, 31) umfaßt, der in einer Durchbrechung (32) eines der Tragringe (12) im Bereich des eine entsprechende Anlauffläche (33) aufweisenden inneren Endes eines der Beine (15, 16) angeordnet und mittels der Anlauffläche beim Ausklappen dieses Beines in eine Umfangsnut (29) des Abstandshalters (9) drückbar ist.

9. Stativ nach einem der vorhergehenden Ansprüche, dadurch gekennzeichnet, daß wenigstens eines der Tragelemente (12) für eines der Beine (15) gegen Drehung gegenüber dem Abstandshalter sicherbar ist.

10. Stativ nach einem der vorhergehenden Ansprüche, dadurch gekennzeichnet, daß wenigstens die in der zweiten Gebrauchslage (Schulterstativ) zur Abstützung dienenden Beine (15, 16) zur Bildung einer konkaven Abstützfläche (26) gewölbt sind.

**Claims**

1. Stand for optical instruments, especially cameras, with a fastening head (2) for the instrument, with a spacer (9) articulated to the latter and of variable length, and with at least three legs (15, 16, 17) which are mounted with their inner ends by means of supporting elements (12, 13, 14) on the lower end of the spacer (9) remote from the fastening head (2) and which can be pivoted between a position of rest essentially parallel to the axis of the spacer (9) and a spread-apart position of use, characterised in that the supporting elements (12, 13, 14) for at least two of the legs (15, 16, 17) are rotatable about the spacer (9) in such a way that, to form a table stand, the legs can be adjusted into a first position of use (Fig. 1 and 3), in which the legs are arranged approximately at the same angular distance from one another in a peripheral direction, and, to form a shoulder stand, can be adjusted into a second position of use (Fig. 2 and 4), in which the legs are arranged diametrically opposite one another, at least two legs oberlapping one another or resting against one another.

2. Stand according to Claim 1, characterised in that the legs (15, 16, 17) are each fastened pivotably to a lateral pair of lugs (22, 23, 24) of supporting rings (12, 13, 14) which are mounted, succeeding one another axially on the spacer (9) so as to be rotatable about the latter and which serve as supporting elements.

3. Stand according to Claims 1 and 2, characterised in that the supporting rings (12, 13, 14) each have at their edge pointing towards an adjacent supporting ring an end ring (12a, 13a, 14a) which overlaps a matching end ring (13b, 14b) of the particular adjacent supporting ring, and in that to prevent the axial movement the particular end ring (12a, 13a) has a radially extending locking pin (18) which engages into a peripheral groove (19) of the associated matching end ring (13b, 14b).

4. Stand according to Claim 3, characterised in that the peripheral groove (19) of the matching end ring (13b, 14b) extends only over an angular range of approximately 60°.

5. Stand according to one of Claims 2 to 4, characterised in that there are three legs (15, 16, 17) and correspondingly three supporting rings (12, 13, 14), in that, seen from the lower end (28) of the spacer (9), the pair of lugs (23) of the second supporting ring (13) is located next to the first supporting ring (12) in an axial position, relative to the spacer (9) and corresponding to the pair of lugs (22) of the first supporting ring (12), and in that the legs (15, 16) articulated to the first and second supporting rings (12, 13) are of identical design.

6. Stand according to Claim 5, characterised in that the third supporting ring (14), seen from the lower end (28) of the spacer (9), corresponds to the second supporting ring (13) and supports a third leg (17) which is longer than the first and second legs (15, 16).

7. Stand according to one of the preceding claims, characterised in that the supporting elements (12, 13, 14) for the legs (15, 16, 17) are displaceable axially in relation to the spacer (9) and can be fixed in their position of use on the lower end (28) of the spacer by means of a locking mechanism (29, 30, 31, 33).

8. Stand according to Claim 7 and one of Claims 2 to 6, characterised in that the locking mechanism in corporates at least one clamping body (30,31) which is located in a perforation (32) of one of the supporting rings (12) in the region of the inner end, having an appropriate abutting face (33), of one of the legs (15, 16) and which, when this leg is swung out, can be pressed by means of the abutting face into a peripheral groove (29) of the spacer (9).

9. Stand according to one of the preceding claims, characterised in that at least one of the supporting elements (12) for one of the legs (15) can be secured against rotation relative to the spacer.

10. Stand according to one of the preceding claims, characterised in that at least the legs (15, 16) serving for bracing in the second position of use (shoulder stand) are curved to form a concave bracing surface (26).

**Revendications**

1. Pied destiné à des appareils optiques, en particulier des caméras, et comprenant une tête de fixation (2) pour l'appareil, un organe d'espacement (9) relié par articulation à celle-ci et dont la longueur est variable, et au moins trois jambes (15, 16, 17) montées, par leur extrémité inférieure, au moyen d'éléments de soutien (12, 13, 14), sur l'extrémité inférieure de l'organe d'espacement (9), éloignée de la tête de fixation (2), et à même de pivoter entre une position d'utilisation écartée et une position de repos parallèle en substance à l'axe de l'organe d'espacement (9), caractérisé en ce que les éléments de soutien (12, 13, 14) pour au moins deux des jambes (15, 16, 17) peuvent tourner sur l'organe d'espacement (9), de telle sorte que les jambes soient réglables pour la formation d'un pied dit de table, dans une première position d'utilisation (figures 1 et 3) où les jambes sont disposées dans le sens périphérique, dans une certaine mesure à une distance angulaire égale les unes des autres, et sont aussi réglables, pour la formation d'un pied dit d'épaule, dans une deuxième position d'utilisation (fig. 2 et 4) où les jambes sont disposées à l'état diamétralement opposé par recouvrement ou arrangement réciproque d'au moins deux jambes.

2. Pied selon la revendication 1, caractérisé en ce que les jambes (15, 16, 17) sont fixées chacune à l'état pivotant sur une paire d'oeillets latérale (22, 23, 24) d'anneaux de soutien (12, 13, 14) servant d'éléments de soutien et montés successivement sur l'organe d'espacement (9) en vue de tourner sur celui-ci.

3. Pied selon l'une quelconque des revendications 1 et 2, caractérisé en ce que les anneaux de soutien (12, 13, 14) présentent chacun, sur leur face orientée vers un anneau de soutien voisin, un anneau final (12a, 13a, 14a) qui coïncide avec un anneau final opposé (13b, 14b) de chaque anneau de soutien voisin et en ce que chacun des anneaux finals (12a, 13a) présente, pour empêcher le mouvement axial, une cheville de verrouillage (18) se développant radialement et s'engageant dans une rainure périphérique (19) de l'anneau final opposé correspondant (13b, 14b).

4. Pied selon la revendication 3, caractérisé en ce que la rainure périphérique (19) de l'anneau final opposé (13b, 14b) ne s'étend que sur une zone angulaire d'environ 60°.

5. Pied selon l'une quelconque des revendications 2 à 4, caractérisé en ce que trois jambes (15, 16, 17) et, par conséquent, trois anneaux de soutien (12, 13, 14) sont prévus; en ce qu'en considérant l'extrémité inférieure (28) de l'organe d'espacement (9), la paire d'oeillets (23) du deuxième anneau de soutien (13) est disposée à côté du premier anneau de soutien (12), par rapport à l'organe d'espacement (9), dans une position axiale correspondant à la paire d'oeillets (22) du premier anneau de soutien (12); et en ce que les jambes (15, 16) raccordées par articulation au premier et au deuxième anneau de soutien (12, 13) sont conçues identiquement.

6. Pied selon la revendication 5, caractérisé en ce que le troisième anneau de soutien (14), considéré à partir de l'extrémité inférieure (28) de l'organe d'espacement (9), correspond au deuxième anneau de soutien (13) et comprend une troisième jambe (17) plus longue par rapport à la première et à la deuxième jambe (15, 16).

7. Pied selon l'une quelconque des revendications 1 à 6, caractérisé en ce que les éléments de soutien (12, 13, 14) pour les jambes (15, 16, 17) sont déplaçables axialement par rapport à l'organe d'espacement (9) et peuvent être fixés, au moyen d'un dispositif d'arrêt (29, 30, 31, 33), dans leur position d'utilisation, à l'extrémité inférieure (28) de l'organe d'espacement.

8. Pied selon la revendication 7 et l'une quelconque des revendications 2 à 6, caractérisé en ce que le dispositif d'arrêt comprend au moins un corps de serrage (30, 31), qui est disposé dans une découpure (32) d'un des anneaux de soutien (12) dans la zone de l'extrémité inférieure d'une des jambes (15, 16), extrémité présentant une surface portante correspondante (33) et qui peut être pressé, au moyen de la surface portante, lors de l'écartement de cette jambe, dans une rainure périphérique (29) de l'organe d'espacement (9).

9. Pied selon l'une quelconque des revendications 1 à 8, caractérisé en ce qu'au moins l'un des éléments de soutien (12) pour l'une des jambes (15) peut être empêché de tourner par rapport à l'organe d'espacement.

10. Pied selon l'une quelconque des revendications 1 à 9, caractérisé en ce qu'au moins les jambes (15, 16) servant au soutien dans la deuxième position d'utilisation (pied dit d'épaule) sont cintrées pour la formation d'une surface d'appui concave (26).

FIG. 2

FIG. 1

FIG. 3

FIG.5

FIG.4

0 013 948